# EUROPEAN PATENT SPECIFICATION

(11) **EP 1 593 282 B1**
(45) Date of publication and mention of the grant of the patent: **25.06.2014**
(21) Application number: 04706240.1
(22) Date of filing: 29.01.2004
(51) Int. Cl.: G06Q 30/04, H04M 15/06, H04M 17/00, H04W 4/24

(54) **A method for processing accounting requests in a communication system and communication system**
Verfahren zur Verarbeitung von Abrechnungsanforderungen in einem Kommunikationssystem und Kommunikationssystem
Procédé de traitement de demandes de reddition de compte dans un système de communication et système de communication associé

(30) Priority: 12.02.2003 US 446547 P
(43) Date of publication of application: 09.11.2005
(73) Proprietor: Sulvanuss Capital L.L.C., Wilmington, DE 19808 (US)
(72) Inventor: KOSKINEN, Juha-Pekka, FIN-13210 Hämeenlinna (FI); VALLINEN, Juha, R., FIN-33900 Tampere (FI)
(74) Representative: Small, Gary James
(86) International application number: PCT/IB2004/000205
(87) International publication number: WO 2004/073344

(56) References cited:
- WO-A-02/086716
- ETSI: "3rd Generation Partnership Project;Technical Specification Group Service and System Aspects; Telecommunication management; Charging management; Charging data description for the IP Multimedia Subsystem (IMS) (Release 5)" 3GPP TS 32.225 V5.0.0, XX, XX, September 2002 (2002-09), pages 1-69, XP002273902
- ETSI: "Digital cellular telecommunications system (Phase 2+) (GSM);Universal MObile Telecommunications System (UMTS); Telecommunication Management; Charging and Billing; 3G call and event data for the Packet Switched (PS) domain (3GPP TS 32.015 version 3.5.0 Release 1999)" ETSI TS 132 015 V3.5.0, XX, XX, March 2001 (2001-03), XP002238092
- CALHOUN ET AL.: "Diameter Base Protocol" AAA WORKING GROUP, [Online] December 2002 (2002-12), pages 1-149, XP002279356 Retrieved from the Internet: <URL:http://www.diameter.org/drafts/latest /draft-ietf-aaa-diameter-17.txt> [retrieved on 2004-05-06]

## Description

### FIELD OF THE INVENTION

The present invention relates to a method for processing accounting requests relating to services provided to a user of a communication network. The present invention relates in particular, but not exclusively, to accounting requests relating to IP multimedia services. The present invention also relates to a communication system and to entities for use in a communication system.

### BACKGROUND OF THE INVENTION

A communication system is a facility that enables communication between two or more entities such as user equipment and/or other nodes associated with the system. The communication may comprise, for example, communication of voice, data, multimedia and so on.

Communication systems proving wireless communication for user terminals or other nodes are known. An example of a wireless system is a public land mobile network (PLMN). A PLMN is typically a cellular system wherein a. base transceiver station (BTS) or similar access entity serves user equipment (UE) such as mobile stations (MS) via a wireless interface between these entities. The operation of the apparatus required for the communication can be controlled by one or several control entities. The various control entities may be interconnected. One or more gateway nodes may also be provided for connecting the cellular network to other networks, such as to another cellular system or to a public switched telephone network (PSTN) and/or other communication networks such as an IP (Internet Protocol) and/or other packet switched data networks. The communication between the user equipment and the elements of the communication network can be based on an appropriate communication protocol, such as the session initiation protocol (SIP).

A communication system typically operates in accordance with a given standard or specification which sets out what the various elements of the system are permitted to do and how that should be achieved. For example, the standard or specification may define if the user, or more precisely, user equipment or terminal is provided with a circuit switched service and/or a packet switched service. Communication protocols and/or parameters which shall be used for the connection may also be defined. In other words, a specific set of "rules" on which the communication can be based needs to be defined to enable communication by means of the.system.

The communication systems typically have separated functions. In addition to provisioning of services for the users of the system the communication system also provides functions such as network management and configuration. In the current third generation (3G) multimedia network architectures various servers are used for handling of provision of different communication services for mobile users. An example of one of the services is the so-called IP multimedia services (IMS), defined in 3^{rd} Generation partnership project 3GPP specifications.

When a server receives a service request from a user, it usually needs to ensure that accounting information is collected for charging the user for the delivered service. With regard to IP Multimedia services which are to be charged online, a server sends an accounting request to an Event Charging Function. When the server receives an accounting answer from the Event Charging Function, the server knows that the subscriber's account has been deducted with an amount corresponding to the service fee. After the receipt of the accounting answer the server can thus deliver the requested service to the user.

It may occur that the server does not receive an accounting answer within a specified time period. This situation may be caused, for example, by one of the following errors. Firstly, the Event Charging Function may have not received the accounting request, which the server sent. Secondly, the Event Charging Function may have been unable to receive a confirmation from further accounting entities about deducting the subscriber's account. Thirdly, the subscriber's account may have been properly deducted, but the either the further accounting entity or the Event Charging Function fails to send an accounting answer. Fourthly, the Event Charging.Function may have sent the accounting answer properly to the server, but the accounting answer has been lost in the network.

When the server notices that an accounting answer is missing, it retransmits the accounting request in accordance with the specifications. This retransmitted accounting request may be sent to the same Event Charging Function or a different Event Charging Function to that which previously transmitted the accounting request. According to the 3GPP technical specification TS 32.225 relating to the charging, an accounting request and an accounting answer both contain a session identifier. This session identifier is used to identify the accounting session, to which the accounting messages relate. There may be more than one accounting session, which relate to a given IP multimedia service session. An accounting request also contains, for example, an IMS Charging Identifier for identifying the user account, and an Accounting Record Number for identifying accounting records within an accounting session.

When a retransmitted accounting request is processed in network entities responsible for deducting the user account, there is the need to find out whether a corresponding, previously received accounting request already caused the subscriber's account to be deducted. If the service has already been charged for, it is sufficient to only send the accounting answer to the server. Oh the other hand, if the service has not yet been charged for, the subscriber's account needs to be deducted before sending the accounting answer.

The specification TS 32.225 discusses in general level detection of duplicate accounting requests. It is said that duplicate detection is based on inspecting the session identifier values and the accounting record number values.

In general the specifications say that an accounting session identifier must remain the same throughout an accounting session. The specifications remain silent about the value of the accounting session identifier in the case of retransmitted accounting requests. It is thus unclear if a retransmitted accounting request, especially when it is sent to a different Event Charging Function than the earlier corresponding accounting request, begins a new session or continues the earlier session. As the specifications are vague, an application server might change the accounting session identifier or retain the same accounting session identifier for a retransmitted accounting request.

The duplicate detection proposed in the specification, which uses accounting session identifiers and accounting record numbers, may therefore not work. If the accounting session identifier is not the same in an accounting request and in a corresponding retransmitted accounting request, it is not possible to find out that a previously received accounting request actually relates to the same charging event.

However, the current standardization proposals have not recognized this as a problem. In fact with the current proposals a user could be charged twice for a service, because duplicate accounting requests are not properly detected.

It shall be appreciated that although the above discussed problems relate to IMS in third generation (3G) communication systems, similar disadvantages may be associated with other systems as well and thus the description is not limited to these examples.

### SUMMARY OF INVENTION

It is an aim of embodiments of the present invention to address one or more of the problems discussed above.

According to a first aspect of the present invention there is provided a method for providing accounting requests, relating to a service provided to a user of a communication network, the method comprising the steps of: transmitting a first accounting request said first accounting request comprising a first session identifier; determining that retransmission of said first accounting request is required; characterized by: preparing a second accounting request corresponding to the first accounting request, said second accounting request comprising a second session identifier, said second session identifier being different from the first session identifier, said second accounting request further comprising correlation information, said correlation information comprising the first session identifier, and transmitting the second accounting request as a retransmitted first accounting request.

According to a second aspect of the present invention there is provided a method for processing accounting requests, relating to a service provided to a user of a communication network, the method comprising the steps of: receiving an accounting request said accounting request comprising a second session identifier; determining if the received accounting request is a retransmitted accounting request comprising correlation information, said correlation information comprising at least one identifier, and comparing the at least one identifier of said correlation information to at least one first session identifier in at least one previously received accounting request to determine if the retransmitted accounting request corresponds to a previously received accounting request, the second session identifier being different from the first session identifier.

According to a third aspect of the present invention there is provided an entity for use in a communication network, the entity comprising: means for transmitting a first accounting request, said first accounting request comprising a first session identifier, means for determining that retransmission of the first accounting request is required characterized by: means for preparing a second accounting request corresponding to the first accounting request, said second accounting request comprising a second session identifier, said second session identifier being different from the first session identifier, said second accounting request further comprising correlation information, said correlation information comprising the first session identifier; and means for transmitting the second accounting request as a retransmitted first accounting request.

According to a fourth aspect of the present invention there is provided an entity for use in a communication network, the entity comprising means for receiving an accounting request, said accounting request comprising a second session identifier, characterized by: means for determining if the received accounting request is a retransmitted accounting request comprising correlation information, said correlation information comprising at least one identifier; and means for comparing the at least one identifier of said correlation information to at least one first session identifier in at least one previously received accounting request to determine if the retransmitted accounting request corresponds to a previously received accounting request, the second session identifier being different from the fist session identifier.

According to a fifth aspect of the present invention there is provided a communication network comprising a first entity and a second entity, the first entity comprising: means for transmitting a first accounting request, said first accounting request comprising a first session identifier, means for preparing a second accounting request corresponding to the first accounting request, said second accounting request comprising a second session identifier, said second session identifier being different from the first session identifier, said second accounting request further comprising correlation information, said correlation information comprising said first session identifier; and means for transmitting the second accounting request as a retransmitted first accounting request; and the second entity comprising means for receiving an accounting request, means for determining if said received accounting request is a retransmitted accounting request; and means for comparing said session identifier of said correlation information to the first session identifier of at least one previously received accounting request to determine if the retransmitted accounting request corresponds to the previously received accounting request.

The appended dependent claims describe some embodiments of the invention.

Embodiments of the invention are arranged to include correlation information in a retransmitted accounting request. An accounting request may comprise a set of identifiers, which are used to determine to which accounting event the accounting request relates. A retransmitted accounting request preferably comprises, in addition to that set of identifiers, correlation information. This correlation information preferably comprises at least one value of those identifier values, which are present in the previous corresponding accounting request.

Preferably, in those cases, where at least one of the identifier values are different in a retransmitted accounting request and in the corresponding previous accounting request, the correlation information contains those values present in the corresponding previous accounting request. The retransmitted accounting request may thus be properly compared to previously received accounting requests using the correlation information.

In some cases all the values of the identifiers belonging to the identifier set may be same in a retransmitted accounting request and in a corresponding previous accounting request. Even in this case it causes no problems to add, for example, one of the identifier values as correlation information to the retransmitted accounting request. This way the format of all retransmitted accounting requests, which relate to similar charging events, remains the same and processing of the accounting request may be straightforward. In addition, the presence of correlation information may be used to detect that an accounting request is a retransmitted accounting request.

Alternatively, it is possible that the correlation information is present in only to those retransmitted accounting requests, where at least one identifier in the retransmitted accounting request has a value which is different from the values in the first accounting request.

### BRIEF DESCRIPTION OF FIGURES

For a better understanding of the present invention and as how the same may be carried into effect, reference will now be made by way of example only to the accompanying drawings in which:
Figure 1 shows one example of a system in which embodiments of the present invention can be implemented;
Figure 2 shows a message sequence chart according to one embodiment of the invention;
Figure 3 shows a flowchart of a method of providing an accounting requests in accordance with one embodiment of the first aspect of the invention; and
Figure 4 shows a flowchart of an accounting request processing method in accordance with one embodiment of the second aspect of the invention.

### DETAILED DESCRIPTION OF PREFERRED EMBODIMENTS OF THE INVENTION

The 3G Partnership Project (3GPP) is defining a reference architecture for the Universal Mobile Telecommunication System (UMTS) core network which will provide the users of user equipment UE with access to these services. This UMTS core network is divided into three principal domains. These are the Circuit Switched domain, the Packet Switched domain and the Internet Protocol Multimedia (IM) domain. The latter of these, the IM domain, makes sure that multimedia services are adequately managed. The IM domain supports the Session Initiation Protocol (SIP) as developed by the Internet Engineering Task Force (IETF).

In the current third generation (3G) multimedia network architectures it is assumed that various servers are used for handling different functions associated with a session. The 3G systems Internet Protocol (IP) multimedia subsystems (IMSs) have been developed in an attempt to conform to Internet standards set out by the IETF (Internet Engineering Task Force) in order to achieve independence of the various access methods and networks, which may be used in accessing the IP multimedia services, and to maintain a smooth interoperation with wireless terminals across the Internet. Therefore, interfaces specified conform as far as possible to IETF standards for those cases where an IETF protocol, e.g. the Session Initiation Protocol (SIP), has been selected.

The IMN enables operators of mobile networks to offer their subscribers multimedia services based on and built upon Internet applications, services, and protocols. The embodiments of the present invention will be described in the context of the Universal Mobile Telecommunication System (UMTS) 3G system and session initiation protocol (SIP).

Those interested may gather a more detailed description of the IMN from the 3GPP (3^{rd} Generation Partnership Project) specification TS 23.228.

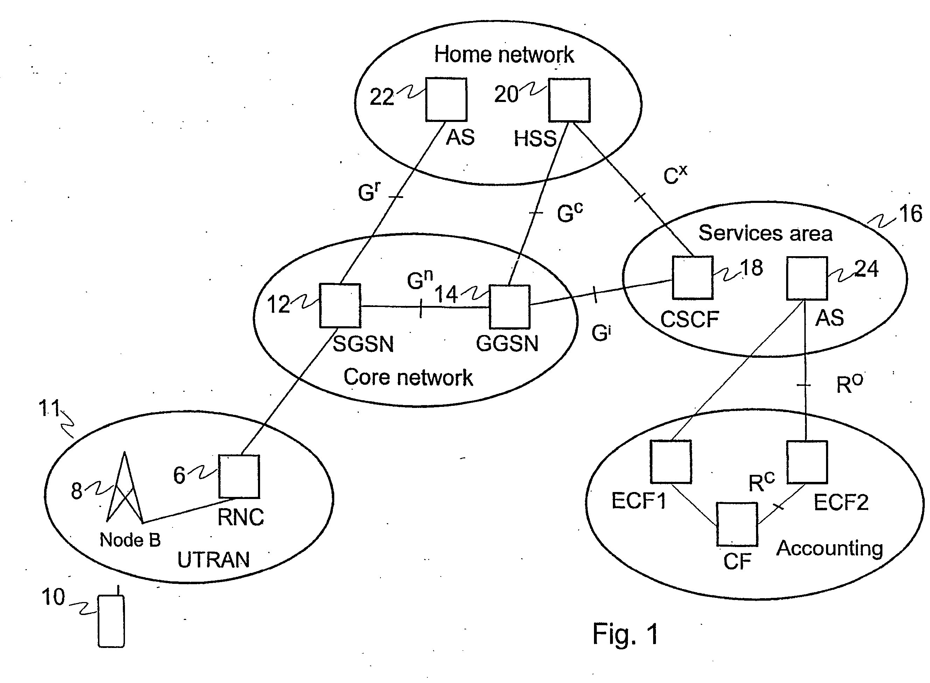

Figure 1 illustrates a partial internet protocol (IP) multimedia network architecture. A mobile station (MS) 10 can be a mobile telephone or a laptop computer which has a radio modem or a fax adapted for radio access. The term MS is used here as an example of mobile user equipment (UE). This communicates with the Universal Mobile Telecommunication System (UMTS) Radio Access Network (UTRAN) 11 over the radio interface (Uₘ). The UTRAN includes a network element node B 8, which provides equipment for transmission and reception of messages and may additionally include ciphering equipment. This communicates with a radio network controller (RNC) 6 as is known in the art.

The RNC sets up the radio channels for signaling to the core network node 12 which may comprise a serving General Packet Radio Service GPRS support node (SGSN). The signaling occurs over the Iᵤ interface. The SGSN provides the network access node and mobility management functions. The node 12 is a switching node which can perform connection management, mobility management and authentication activities. The core network node 12 is connected to the gateway GPRS support node (GGSN) 14 via the Gₙ interface. The GGSN provides access, via the Gᵢ interface, to the services area 16 over IP packet data networks such as the Internet and Internet service providers (ISP).

The call state control function (CSCF) 18 supports and controls sessions during which the UE obtains IMS services from the services area 16. In addition, CSCF may consist of Proxy, Interrogating and Serving CSCFs as described earlier. The CSCF provides flexibility to modify, add or erase bearers used by the user's services. Amongst other functions the CSCF 18 controls call functions, thus executes call setup, modification and termination and performs address handling. The CSCF accesses the Home Subscriber Server (HSS) 20 via the Cₓ interface. The HSS is a master server containing data relating to a particular user. It contains data relating to a specific user, which can identify how call services are to be carried out and authentication and authorization information. The HSS is located in the home network of the UE user which may be some distance from the location of the UE, which is serviced by a local (visited) network. The HSS is connected to the SGSN and GGSN via the Gᵣ and G_{c} interfaces respectively.

In order to provide access to the Internet and other IM services to users, protocols have been developed to assist in providing telephony services across the Internet. The session initiation protocol (SIP) is one such protocol, which has been developed for controlling the creation, modification and termination of sessions with one or more parties. The call sessions may include Internet or other IP network telephone calls, conferences or other multimedia activities.

In the current third generation (3G) multimedia network architectures various servers are used for handling of provision of different communication services for mobile users. Figure 1 shows two examples of Application Servers. Application server 22 resides in the home network of a user. Alternatively an application server may reside in any network accessible to the user; Application Server 24 in the service area illustrates this possibility.

With respect to charging for the IP multimedia services, reference is made to TS 32.225 v5.0.0 3rd Generation Partnership Project; Technical Specification Group Service and System Aspects; Telecommunication management; Charging management; Charging data description for the IP Multimedia Subsystem (IMS) (Release 5).

Charging for services may be either offline or online. In offline charging, charging or accounting information does not affect, in real-time, the service rendered. In online charging, charging or accounting information can affect, in real-time, the service rendered; therefore a direct interaction of the charging mechanism with session/ service control is required. In online charging of IP multimedia services, the application server transmits accounting information to an Event Charging Function (ECF). The Event Charging Function forwards the accounting information to a Correlation Function (CF), which resides in an Online Charging System (OCS). Figure 1 illustrates two Event Charging Functions ECF1 and ECF2, a Correlation Function CF, the R° interface between an application server and an Event Charging Function and the R^{c} interface between an Event Charging Function and a Correlation function:

Two cases for online event charging are distinguished in the specification: Immediate Event Charging (IEC) and Event Charging with Unit Reservation (ECUR). In the case of Immediate Event Charging, a proper amount of monetary units is deducted from the subscriber's account in a single operation. Event Charging with Unit Reservation includes the process of requesting, reserving, releasing and returning unused monetary units. The deduction of the corresponding monetary units then occurs upon conclusion of the ECUR transaction.

An accounting request transmitted by an application server typically indicates, which of these charging mechanisms is to be used for online charging.

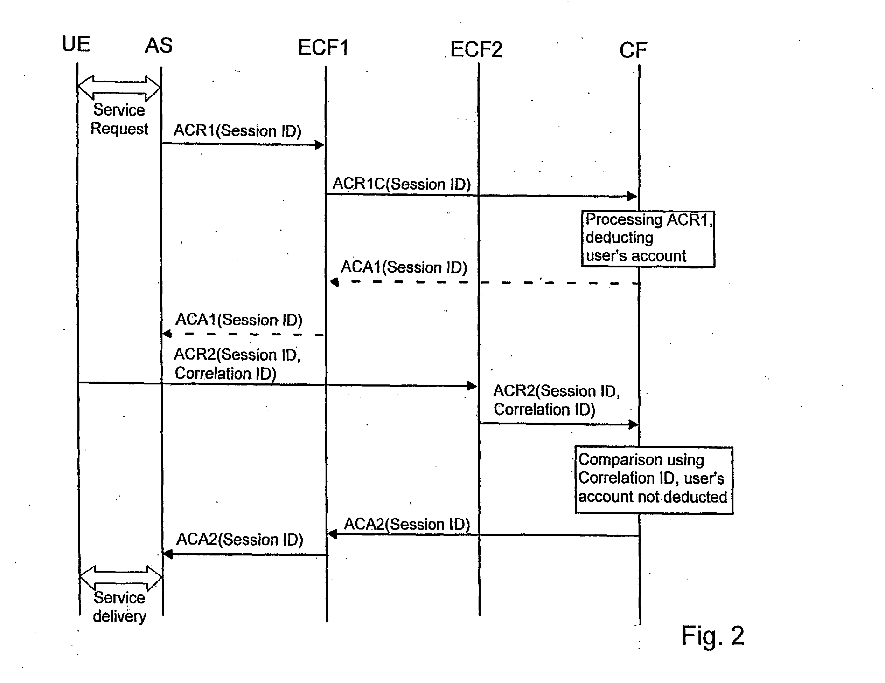

Reference is next made to Figure 2 which shows a message sequence chart relating to Immediate Event Charging and is in accordance with one embodiment of the invention. The application server AS receives first a service request from user equipment UE; typically this service request is in accordance with the SIP protocol. After receiving a service request, the application server AS transmits an accounting request ACR1 to Event Charging Function ECF1. This ACR1 typically includes the following information: accounting session identifier, accounting record number, IMS charging identifier and information specifying online charging mechanisms. In Figure 2, only accounting session identifier is explicitly shown in connection with ACR1.

If the accounting messages in Figure 2 are messages according to the TS 32.225 specification and Diameter protocol is used to transmit them, the accounting request ACR1 contains the following Attribute Value Pairs (AVPs): Session-ID, Accounting-Record-Number, IMS-Charging-Identifier, Requested-Action. Table 1 illustrates an example of the contents of the accounting request ACR1. When the Diameter protocol is used, the application server acts as a Diameter client. Furthermore, the Session ID is.specified in the Diameter protocol.

**Table 1. Contents of ACR1**

| Identifier name | Value |
|---|---|
| Accounting-Session-ID | 12 |
| Accounting-Record-Number | 1 |
| IMS-Charging-Identifier | 23 |
| Requested-Action | DIRECT_DEBITING |

In the situation shown in Figure 2, the Event Charging Function ECF1 forwards the accounting request ACR1 to a Correlation Function CF. The Correlation Function CF takes care of deducting the subscriber's account properly. Thereafter it sends an accounting answer ACA1 to the ECF1. The ECF1, however, may fail to receive the accounting answer ACA1. Alternatively, it may fail to forward the accounting answer ACA1 to the application server AS or the accounting answer ACA1 is lost in the network. These options are illustrated in Figure 2 with dashed arrows. This means that the application server AS does not receive the accounting answer ACA1 within a predefined time period after transmittance of the Accounting Request ARC1.

As illustrated in Figure 2, when an accounting answer is not received within the expected time period, the application server AS retransmits an accounting request to Event Charging Function ECF2. This retransmitted accounting request ACR2 contains, in addition to the information contained in the accounting request ACR1, the following information: an accounting correlation identifier and often also further information indicating that ACR2 is a retransmitted accounting request. In Figure 2 only the session identifier and correlation identifier are illustrated. The value of the correlation identifier in ACR2 is set to be the same as the value of the session identifier in ACR1.

If the accounting messages in Figure 2 are messages according TS 32.225 specification and Diameter protocol is used to transmit them, the accounting request ACR2 contains the following Attribute Value Pairs (AVPs): Session-ID, Accounting-Record-Number, IMS-Charging-Identifier, Requested-Action, Accounting-Correlation-identifier, and T-flag, which indicates retransmission. The T-flag identifier is a part of the Diameter message header. Table 2 illustrates an example of the contents of the accounting request ACR2.

**Table 2. Contents of ACR2**

| Identifier name | Value |
|---|---|
| Accounting-Session-ID | 13 |
| Accounting-Record-Number | 1 |
| IMS-Charging-Identifier | 23 |
| Requested-Action | DIRECT_DEBITING |
| T-flag | 1 |
| Accounting-correlation-ID | 12 |

As Figure 2 shows, the application server AS may send the retransmitted accounting request to a second Event Charging Function ECF2. In this case it is possible that the session identifier value in ACR1 is different from the session identifier value in ACR2. But even if the session identifiers are the same in ACR1 and ACR2, it is possible to add the correlation identifier in ACR2. This way the format of a retransmitted ACR is the same irrespective of the values of the other identifiers.

Furthermore, in comparing a received retransmitted accounting request in CF it is possible always to compare the correlation identifier value in a received retransmitted accounting request to a session identifier value in an earlier received accounting request.

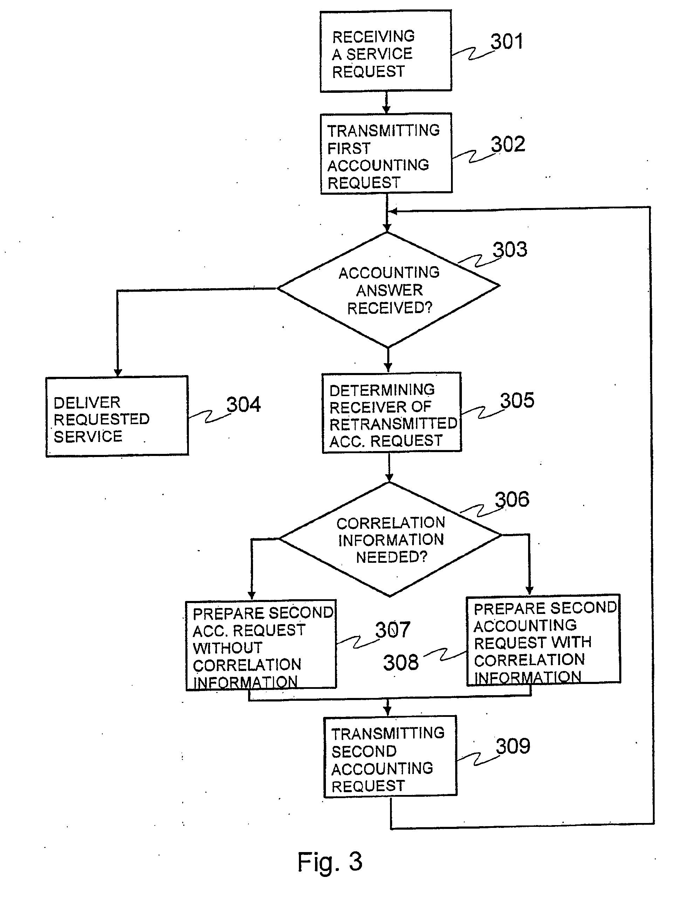

Figure 3 illustrates a flowchart of a method of providing accounting requests, this method being implemented typically in a server providing services to users in a communication network. In step 301 a service request is received, and in step 302 an accounting request is sent to a Correlation Function or to a network providing similar functionality. The accounting request typically contains information indicating the user to be charged and information for connecting the accounting request to the event causing the accounting request to be sent. In step 303 it is checked whether an accounting answer is received, and if the accounting answer has been received, service is delivered to the user in step 304.

If an accounting answer is not received in step 303, then there may be need to retransmit a second accounting request as a retransmitted first accounting request. In this case, a receiver for the second accounting request is determined in step 305. The receiver may be the same network entity receiving the first accounting request or it may be another network entity. In step 306 it is determined whether correlation information needs to be present in the second accounting request. Then a second accounting request is prepared either with correlation information (step 308) or without correlation information (step 309). Thereafter the second accounting request is transmitted in step 309.

As discussed above, it is possible to have correlation information in all retransmitted accounting requests. In such a case steps 306 and 307 may be discarded.

After transmitting the second accounting request it is again checked in step 303 whether an accounting answer has been received. If not, it is possible to proceed with steps 305-309. It is, however, evident that these steps cannot be continued repeatedly and a method of providing accounting requests should have some error handling routines. These routines are not discussed here, as their details are irrelevant to having correlation information in retransmitted accounting requests.

The. Correlation Function detects that the accounting request ACR2 is a retransmitted accounting request. This detection may be based on the presence of the correlation identifier or on the presence of some further information indicating retransmission. As the received accounting request ACR2 is a retransmitted one, it is possible that the Correlation Function has already received the corresponding accounting request ACR1. Therefore, there is a need to compare the received retransmitted accounting request to earlier received accounting request. In this comparison, usually only accounting requests received quite recently - within a certain time window - are taken into account. Furthermore, it is advisable to compare the received ACR2 to all received accounting requests, i.e. also to previously received, retransmitted accounting records. This way two or more retransmitted accounting records relating to a certain charging event are noticed, even if the original accounting request never arrived at the Correlation Function.

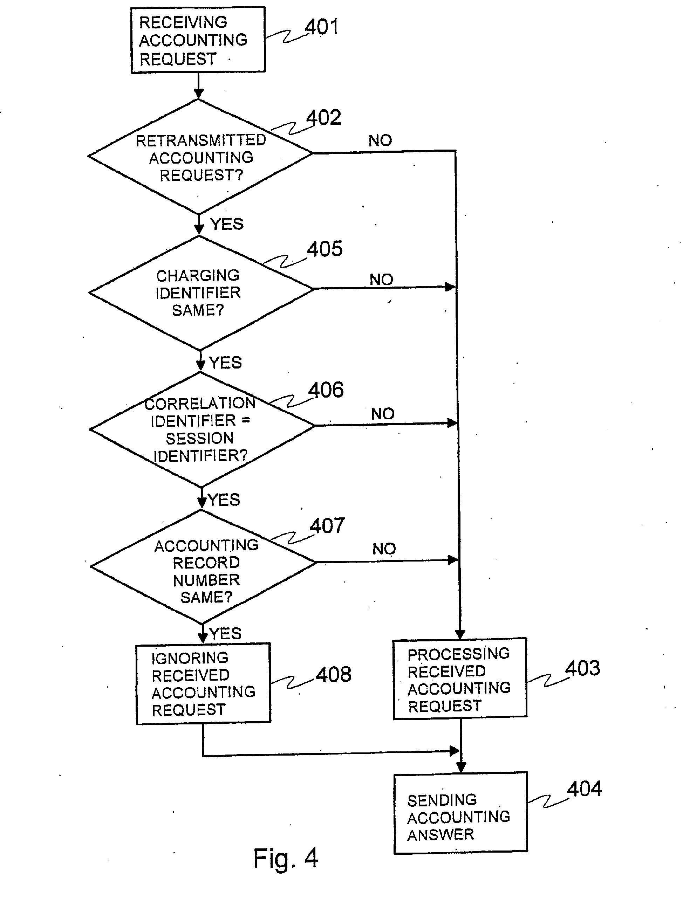

The comparison between previously received accounting requests and the received retransmitted accounting request ARC2 uses the correlation identifier value in ACR2 and the session identifier values in previously received accounting requests. If the accounting messages in Figure 2 are messages according TS 32.225 specification, the comparison is preferably made in the following way, which is illustrated in Figure 4.

Figure 4 illustrates the operation in the Correlation Function or in a network entity having similar functionality. In step 401 in Figure 4 an accounting request is received. In step 402 it is checked whether the received accounting request is a retransmitted accounting request. If the received accounting request is not a retransmitted accounting request, then it is processed in step 403 and an accounting answer is sent in step 404.

If the received accounting request is a retransmitted accounting request, it is compared to previously received accounting requests in steps 405-407. First, the IMS-Charging-Identifier value in the received retransmitted accounting request is compared to IMS-Charging-Identifier values in a previously received accounting request in step 405. If no match is found, there is no earlier accounting request relating to this retransmitted accounting request, and the retransmitted accounting request can be processed in step 403. If at least one previously received accounting request with the same IMS-Charging-Identifier value is found, the correlation identifier value in the received retransmitted accounting request is compared to the accounting session identifier values in those previously received accounting requests in step 406. Again, if no match is found, the received retransmitted accounting request is processed in step 403. If a match is found, the accounting record number value in the received retransmitted accounting request is compared in step 407 to accounting record number values in previously received accounting requests, which were selected in step 406. If a match is not found, the received retransmitted accounting request is processed in step 403. If a match is found, i.e. there is at least one previously received accounting request having the same IMS-Charging-Identifier value and Accounting-record-number value and the session identifier in the previously received accounting request(s) is/are the same as the correlation identifier value in the received retransmitted accounting record, the received retransmitted accounting record is ignored in step 408. This ignoring means that the subscriber account is not deducted. An accounting answer is sent in step 404 to the application server.

Referring again to Figure 2, after comparing the ACR2 to previously received accounting records, the Correlation Function CF notices that it has already received and processed the corresponding accounting request ACR1. Therefore the Correlation Function does not deduct the subscriber's account in the situation illustrated in Figure 2; it only sends an accounting answer ACA2 to the Event Charging Function ECF1, which in turn forwards this ACA2 to the application server AS. The application server then delivers the request service to user equipment UE.

If, in contrast to the situation illustrated in Figure 2, the CF had not received the accounting request ARC1, it would process the received retransmitted accounting request ACR2 and cause the subscriber's account to be deducted. Only thereafter the CF would send the accounting answer ACA2.

Above reference is made to Diameter protocol; see Diameter Base Protocol document for details of this protocol. The most recent version of the Diameter Base Protocol document at the time of filing this application is found at link http://www.ietf.org/internet-drafts/ under name draft-ietf-aaa-diameter-17.txt. As an alternative to the Diameter protocol, it is possible to transmit accounting messages using the Radius protocol; see Remote Authentication Dial In User Service (RADIUS), RFC 2865, http://www.ietf.org/rfc/rfc2865.txt for details of this protocol. Either of these protocols may be used in transmitting also accounting messages in accordance with other specifications than 3GPP TS 32.225.

In this description and claims messages relating to accounting have been called accounting requests and accounting answers. These names are descriptive, and the intention is to cover any messages relating to accounting and used similarly as accounting requests and answers described above, irrespective of the name of those messages.

Although the detailed description of the present invention relates to online charging and in more particular to immediate event charging, the invention is applicable also more generally to online charging and offline charging. In offline charging the service delivery is usually not dependent on the receipt of an accounting answer, so an accounting entity need not necessary send an accounting answer in connection with comparing a retransmitted accounting request to previous received accounting requests. Furthermore, the accounting event relating to the accounting request may be a refund, not only a fee to be charged from a subscriber.

Although the invention has been described by referring to the IP Multimedia Services architecture and 3G communication systems, this invention is also applicable to any other communication systems and protocols, where similar accounting messages are used. Examples of other systems, without limiting to these, include the public internet and cable networks.

Diameter and Radius protocols are mentioned only as examples of protocols, in accordance with which the accounting messages may be.

It should be appreciated that whilst embodiments of the present invention have been described in relation to user equipment such as mobile stations, embodiments of the present invention are applicable to any other suitable type of users. Various user equipment (UE) such as computers (fixed or portable), mobile telephones, personal data assistants or organizers and so on are known to the skilled person and can be used to access the internet to obtain services or to establish a session.

## Claims

1. A method for providing accounting requests, relating to a service provided to a user of a communication network, the method comprising the steps of:
transmitting a first accounting request (302) said first accounting request comprising a first session identifier;
determining that retransmission of said first accounting request is required (305);
**characterized by**:
preparing a second accounting request (308) corresponding to the first accounting request, said second accounting request comprising a second session identifier, said second session identifier being different from the first session identifier, said second accounting request further comprising correlation information, said correlation information comprising the first session identifier, and
transmitting the second accounting request (309) as a retransmitted first accounting request.

2. A method as defined in claim 1, wherein the second accounting request is transmitted, if an acknowledgement of a receipt of the first accounting request is not received within a predefined time period (303).

3. A method as defined in claim 1 or 2, wherein the first accounting request is transmitted to a first entity and the second accounting request is transmitted to a second entity.

4. A method as defined in any preceding claim, wherein the correlation information comprises a correlation identifier, the method comprising a further step of:
setting the correlation identifier to be equal to the session identifier in the first accounting request.

5. A method as defined in any preceding claim, wherein the first and second accounting requests each comprise an accounting record number, the method further comprising the step of:
setting the accounting record number in the second accounting request to be the same as the accounting record number in the first accounting request.

6. A method as defined in any preceding claim, wherein the first and second accounting requests comprise at least one further identifier, the at least one further identifier in the first accounting request being different from a corresponding at least one further identifier in the second accounting request and said correlation information further comprises said at least one further identifier from the first accounting request.

7. A method as defined in any preceding claim, wherein said second accounting request comprises, in addition to the correlation information, at least some of the same identifiers as in the first accounting request.

8. A method as defined in claim 7, wherein at least one value of the at least some of the same identifiers in said first and second accounting requests are different.

9. A method as defined in any preceding claim, wherein an accounting request is an accounting request of an internet protocol multimedia subsystem charging architecture.

10. A method as defined in any preceding claim, wherein accounting requests are transmitted using diameter protocol, an accounting request comprises a diameter session identifier, and a retransmitted accounting request comprises information indicating retransmission.

11. A method as defined in any preceding claim, wherein accounting requests are transmitted using radius protocol.

12. A method as defined in any preceding claim, wherein each accounting request comprises at least one identifier arranged to have a plurality of different values, said values providing respective information for the respective identifiers.

13. A method as defined in claim 12, wherein the correlation information comprises a correlation identifier.

14. A method as defined in any preceding claim, wherein each accounting request comprises at least one identifier comprising first information indicating the name of the identifier and second information indicating the value of the identifier.

15. A method as defined in claim 14, wherein the identifiers are transmitted as attribute value pairs.

16. A method as defined in claim 14 or 15, wherein the correlation information comprises a correlation identifier.

17. A method as defined in any preceding claim, wherein the retransmitted accounting request relates to a one-time charging event.

18. A method as defined in claim 17, wherein the one-time charging event is an event to be charged from a subscriber account.

19. A method as defined in claim 17 or 18, wherein the one-time charging event is an event to be refunded to a subscriber account.

20. A method as defined in any preceding claim, wherein the first accounting request relates to online charging.

21. A method as defined in any preceding claim, wherein the first accounting request relates to offline charging.

22. A method as defined in any preceding claim, wherein the second accounting request comprises information indicating that the second accounting request is a retransmitted accounting request.

23. A method for processing accounting requests, relating to a service provided to a user of a communication network, the method comprising the steps of:
receiving an accounting request (401) said accounting request comprising a second session identifier;
determining if the received accounting request is a retransmitted accounting request (402) comprising correlation information, said correlation information comprising at least one identifier, and
comparing the at least one identifier of said correlation information to at least one first session identifier in at least one previously received accounting request (406) to determine if the retransmitted accounting request corresponds to a previously received accounting request, the second session identifier being different from the first session identifier.

24. A method as defined in claim 23, further comprising the step of:
sending an acknowledgment of the receipt of the received retransmitted accounting request (404), if the received accounting request is a retransmitted accounting request.

25. A method as defined in claim 23 or 24, further comprising the step of:
ignoring the received retransmitted accounting request (408), if a corresponding previously received accounting request is found.

26. A method as defined in claim 23, 24, or 25, further comprising the step of:
processing the received retransmitted accounting request for causing a charging event at a user account (403), if a corresponding previously received accounting request is not found.

27. A method as defined in any of claims 23 to 26, wherein an accounting request is an accounting request of internet protocol multimedia subsystem charging architecture.

28. A method as defined in any of claims 23 to 27, wherein accounting requests are transmitted using diameter protocol, an accounting request comprises a diameter session identifier, and a retransmitted accounting request comprises information indicating retransmission.

29. A method as defined in any of claims 23 to 28, wherein accounting requests are transmitted using radius protocol.

30. A method as defined in any of claims 23 to 29, wherein each accounting request comprises at least one identifier configured to have a plurality of different values, said values providing respective information for respective identifiers.

31. A method as defined in claim 30, wherein the correlation information is a correlation identifier.

32. A method as defined in any of claims 23 to 31, wherein each accounting request comprises at least one identifier comprising first information indicating the name of the identifier and second information indicating the value of the identifier.

33. A method as defined in claim 32, wherein the identifiers are transmitted as Attribute Value Pairs.

34. A method as defined in claim 32 or 33, wherein the correlation information is a correlation identifier.

35. A method as defined in any of claims 23 to 34, wherein the retransmitted accounting request relates to a one-time charging event.

36. A method as defined in claim 35, wherein the one-time charging event is an event to be charged from a subscriber account.

37. A method as defined in claim 35 or 36, wherein the one-time charging event is an event to be refunded to a subscriber account.

38. A method as defined in any of claims 23 to 37, wherein the retransmitted accounting request relates to online charging.

39. A method as defined in any of claims 23 to 38, wherein the retransmitted accounting request relates to offline charging.

40. A method as defined in any of claims 23 to 39, wherein the retransmitted accounting request comprises information indicating that the retransmitted accounting request is a retransmitted accounting request.

41. An entity (24) for use in a communication network, the entity comprising:
means for transmitting a first accounting request, said first accounting request comprising a first session identifier,
means for determining that retransmission of the first accounting request is required
**characterized by**:
means for preparing a second accounting request corresponding to the first accounting request, said second accounting request comprising a second session identifier, said second session identifier being different from the first session identifier, said second accounting request further comprising correlation information, said correlation information comprising the first session identifier; and
means for transmitting the second accounting request as a retransmitted first accounting request.

42. An entity as defined in claim 41, wherein the entity is arranged to transmit said first accounting request to a first entity in the communication network and said second accounting request to a second entity in the communication network.

43. An entity as defined in claim 41 or 42 the entity being an Application Server of the IP Multimedia Subsystem.

44. An entity for use in a communication network, the entity comprising
means for receiving an accounting request, said accounting request comprising a second session identifier,
**characterized by**:
means for determining if the received accounting request is a retransmitted accounting request comprising correlation information, said correlation information comprising at least one identifier; and
means for comparing the at least one identifier of said correlation information to at least one first session identifier in at least one previously received accounting request to determine if the retransmitted accounting request corresponds to a previously received accounting request, the second session identifier being different from the fist session identifier.

45. An entity as defined in claim 44 the entity being arranged to provide correlation function of the internet protocol multimedia subsystem charging.

46. A communication network comprising a first entity (24) and a second entity, the first entity comprising:
means for transmitting a first accounting request, said first accounting request comprising a first session identifier, **characterized by**
means for preparing a second accounting request corresponding to the first accounting request, said second accounting request comprising a second session identifier, said second session identifier being different from the first session identifier, said second accounting request further comprising correlation information, said correlation information comprising said first session identifier; and
means for transmitting the second accounting request as a retransmitted first accounting request;
and the second entity comprising
means for receiving an accounting request,
means for determining if said received accounting request is a retransmitted accounting request; and
means for comparing said session identifier of said correlation information to the first session identifier of at least one previously received accounting request to determine if the retransmitted accounting request corresponds to the previously received accounting request.

47. A communication network as defined in claim 46, wherein the first entity is an application server of the internet protocol multimedia subsystem and the second entity is arranged to provide correlation function of the internet protocol multimedia subsystem charging.

48. A communication network as defined in claim 46 or 47, further comprising:
a third entity;and
a fourth entity,
each of the third and fourth entity comprising:
means for receiving an accounting request, and
means for forwarding the received accounting request to the second entity,
wherein the first entity is arranged to transmit an accounting request to the third entity and a corresponding retransmitted accounting request to the fourth entity.

49. A communication network as defined in claim 48, wherein the third entity and the fourth entity are arranged to provide an event charging function of the internet protocol multimedia subsystem charging.

## Patentansprüche

1. Verfahren zum Bereitstellen von Abrechnungsanforderungen in Bezug auf einen Dienst, der einem Benutzer eines Kommunikationsnetzes bereitgestellt wird, wobei das Verfahren die folgenden Schritte umfasst:
Senden einer ersten Abrechnungsanforderung (302), wobei die erste Abrechnungsanforderung eine erste Sitzungskennung umfasst;
Bestimmen, dass Neusendung der ersten Abrechnungsanforderung erforderlich ist (305);
**gekennzeichnet durch**
Erstellen einer zweiten Abrechnungsanforderung (308), die der ersten Abrechnungsanforderung entspricht, wobei die zweite Abrechnungsanforderung eine zweite Sitzungskennung umfasst, wobei die zweite Sitzungskennung von der ersten Sitzungskennung verschieden ist, wobei die zweite Abrechnungsanforderung ferner Korrelationsinformationen umfasst, wobei die Korrelationsinformationen die erste Sitzungskennung umfassen; und
Senden der zweiten Abrechnungsanforderung (309) als eine neu gesendete erste Abrechungsanforderung.

2. Verfahren nach Anspruch 1, wobei die zweite Abrechnungsanforderung gesendet wird, wenn innerhalb eines vordefinierten Zeitraums (303) keine Bestätigung eines Empfangs der ersten Abrechnungsanforderung empfangen wird.

3. Verfahren nach Anspruch 1 oder 2, wobei die erste Abrechnungsanforderung zu einer ersten Entität gesendet wird und die zweite Abrechnungsanforderung zu einer zweiten Entität gesendet wird.

4. Verfahren nach einem der vorhergehenden Ansprüche, wobei die Korrelationsinformationen eine Korrelationskennung umfassen, wobei das Verfahren ferner den folgenden Schritt umfasst:
Setzen der Korrelationskennung gleich der Sitzungskennung in der ersten Abrechnungsanforderung.

5. Verfahren nach einem der vorhergehenden Ansprüche, wobei die erste und zweite Abrechnungsanforderung jeweils eine Abrechnungsaufzeichnungsnummer umfassen, wobei das Verfahren ferner den folgenden Schritt umfasst:
Setzen der Abrechnungsaufzeichnungsnummer in der zweiten Abrechnungsanforderung gleich der Abrechnungsaufzeichnungsnummer in der ersten Abrechnungsanforderung.

6. Verfahren nach einem der vorhergehenden Ansprüche, wobei die erste und zweite Abrechnungsanforderung mindestens eine weitere Kennung umfassen, wobei die mindestens eine weitere Kennung in der ersten Abrechnungsanforderung von einer entsprechenden mindestens einen weiteren Kennung in der zweiten Abrechnungsanforderung verschieden ist und die Korrelationsinformationen ferner die mindestens eine weitere Kennung aus der ersten Abrechnungsanforderung umfassen.

7. Verfahren nach einem der vorhergehenden Ansprüche, wobei die zweite Abrechnungsanforderung zusätzlich zu den Korrelationsinformationen mindestens bestimmte derselben Kennungen wie in der ersten Abrechnungsanforderung umfasst.

8. Verfahren nach Anspruch 7, wobei mindestens ein Wert der mindestens bestimmten derselben Kennungen in der ersten und zweiten Abrechnungsanforderung verschieden ist.

9. Verfahren nach einem der vorhergehenden Ansprüche, wobei eine Abrechnungsanforderung eine Abrechnungsanforderung einer Vergebührungsarchitektur des Internetprotokoll-Multimediasubsystems ist.

10. Verfahren nach einem der vorhergehenden Ansprüche, wobei Abrechnungsanforderungen unter Verwendung des Diameter-Protokolls gesendet werden, eine Abrechnungsanforderung eine Diameter-Sitzungskennung umfasst und eine neu gesendete Abrechnungsanforderung Neusendung angebende Informationen umfasst.

11. Verfahren nach einem der vorhergehenden Ansprüche, wobei Abrechnungsanforderungen unter Verwendung des Radius-Protokolls gesendet werden.

12. Verfahren nach einem der vorhergehenden Ansprüche, wobei jede Abrechnungsanforderung mindestens eine Kennung umfasst, die dafür ausgelegt ist, mehrere verschiedene Werte aufzuweisen, wobei die Werte jeweilige Informationen für die jeweiligen Kennungen bereitstellen.

13. Verfahren nach Anspruch 12, wobei die Korrelationsinformationen eine Korrelationskennung umfassen.

14. Verfahren nach einem der vorhergehenden Ansprüche, wobei jede Abrechnungsanforderung mindestens eine Kennung umfasst, die erste Informationen, die den Namen der Kennung angeben, und zweite Informationen, die den Wert der Kennung angeben, umfasst.

15. Verfahren nach Anspruch 14, wobei die Kennungen als Attributwertepaare gesendet werden.

16. Verfahren nach Anspruch 14 oder 15, wobei die Korrelationsinformationen eine Korrelationskennung umfassen.

17. Verfahren nach einem der vorhergehenden Ansprüche, wobei die neu gesendete Abrechnungsanforderung ein einmaliges Vergebührungsereignis betrifft.

18. Verfahren nach Anspruch 17, wobei das einmalige Vergebührungsereignis ein Ereignis ist, das aus einem Teilnehmerkonto zu vergebühren ist.

19. Verfahren nach Anspruch 17 oder 18, wobei das einmalige Vergebührungsereignis ein Ereignis ist, das einem Teilnehmerkonto rückzuerstatten ist.

20. Verfahren nach einem der vorhergehenden Ansprüche, wobei die erste Abrechnungsanforderung Online-Vergebührung betrifft.

21. Verfahren nach einem der vorhergehenden Ansprüche, wobei die erste Abrechnungsanforderung Offline-Vergebührung betrifft.

22. Verfahren nach einem der vorhergehenden Ansprüche, wobei die zweite Abrechnungsanforderung Informationen umfasst, die angeben, dass die zweite Abrechnungsanforderung eine neu gesendete Abrechnungsanforderung ist.

23. Verfahren zum Verarbeiten von Abrechnungsanforderungen in Bezug auf einen Dienst, der einem Benutzer eines Kommunikationsnetzes bereitgestellt wird, wobei das Verfahren die folgenden Schritte umfasst:
Empfangen einer Abrechnungsanforderung (401), wobei die Abrechnungsanforderung eine zweite Sitzungskennung umfasst;
Bestimmen, ob die empfangene Abrechnungsanforderung eine neu gesendete Abrechnungsanforderung (402) ist, die Korrelationsinformationen umfasst, wobei die Korrelationsinformationen mindestens eine Kennung umfassen, und
Vergleichen der mindestens einen Kennung der Korrelationsinformationen mit mindestens einer ersten Sitzungskennung in mindestens einer zuvor empfangenen Abrechnungsanforderung (406), um zu bestimmen, ob die neu gesendete Abrechnungsanforderung einer zuvor empfangenen Abrechnungsanforderung entspricht, wobei die zweite Sitzungskennung von der ersten Sitzungskennung verschieden ist.

24. Verfahren nach Anspruch 23, das ferner den folgenden Schritt umfasst:
Senden einer Bestätigung des Empfangs der empfangenen neu gesendeten Abrechnungsanforderung (404), wenn die empfangene Abrechnungsanforderung eine neu gesendete Abrechnungsanforderung ist.

25. Verfahren nach Anspruch 23 oder 24, das ferner den folgenden Schritt umfasst:
Ignorieren der empfangenen neu gesendeten Abrechnungsanforderung (408), wenn eine entsprechende zuvor empfangene Abrechnungsanforderung gefunden wird.

26. Verfahren nach Anspruch 23, 24 oder 25, das ferner den folgenden Schritt umfasst:
Verarbeiten der empfangenen neu gesendeten Abrechnungsanforderung, um ein Vergebührungsereignis an einem Benutzerkonto (403) zu bewirken, wenn keine entsprechende zuvor empfangene Abrechnungsanforderung gefunden wird.

27. Verfahren nach einem der Ansprüche 23 bis 26, wobei eine Abrechnungsanforderung eine Abrechnungsanforderung einer Vergebührungsarchitektur des Internetprotokoll-Multimediasubsystems ist.

28. Verfahren nach einem der Ansprüche 23 bis 27, wobei Abrechnungsanforderungen unter Verwendung des Diameter-Protokolls gesendet werden, eine Abrechnungsanforderung eine Diameter-Sitzungskennung umfasst und eine neu gesendete Abrechnungsanforderung Neusendung angebende Informationen umfasst.

29. Verfahren nach einem der Ansprüche 23 bis 28, wobei Abrechnungsanforderungen unter Verwendung des Radius-Protokolls gesendet werden.

30. Verfahren nach einem der Ansprüche 23 bis 29, wobei jede Abrechnungsanforderung mindestens eine Kennung umfasst, die dafür ausgelegt ist, mehrere verschiedene Werte aufzuweisen, wobei die Werte jeweilige Informationen für die jeweiligen Kennungen bereitstellen.

31. Verfahren nach Anspruch 30, wobei die Korrelationsinformationen eine Korrelationskennung umfassen.

32. Verfahren nach einem der Ansprüche 23 bis 31, wobei jede Abrechnungsanforderung mindestens eine Kennung umfasst, die erste Informationen, die den Namen der Kennung angeben, und zweite Informationen, die den Wert der Kennung angeben, umfasst.

33. Verfahren nach Anspruch 32, wobei die Kennungen als Attributwertepaare gesendet werden.

34. Verfahren nach Anspruch 32 oder 33, wobei die Korrelationsinformationen eine Korrelationskennung sind.

35. Verfahren nach einem der Ansprüche 23 bis 34, wobei die neu gesendete Abrechnungsanforderung ein einmaliges Vergebührungsereignis betrifft.

36. Verfahren nach Anspruch 35, wobei das einmalige Vergebührungsereignis ein Ereignis ist, das aus einem Teilnehmerkonto zu vergebühren ist.

37. Verfahren nach Anspruch 35 oder 36, wobei das einmalige Vergebührungsereignis ein Ereignis ist, das einem Teilnehmerkonto rückzuerstatten ist.

38. Verfahren nach einem der Ansprüche 23 bis 37, wobei die neu gesendete Abrechnungsanforderung Online-Vergebührung betrifft.

39. Verfahren nach einem der Ansprüche 23 bis 38, wobei die neu gesendete Abrechnungsanforderung Offline-Vergebührung betrifft.

40. Verfahren nach einem der Ansprüche 23 bis 39, wobei die neu gesendete Abrechnungsanforderung Informationen umfasst, die angegeben, dass die neu gesendete Abrechnungsanforderung eine neu gesendete Abrechnungsanforderung ist.

41. Entität (24) zur Verwendung in einem Kommunikationsnetz, wobei die Entität Folgendes umfasst:
Mittel zum Senden einer ersten Abrechnungsanforderung, wobei die erste Abrechnungsanforderung eine erste Sitzungskennung umfasst;
Mittel zum Bestimmen, dass Neusendung der ersten Abrechnungsanforderung erforderlich ist;
**gekennzeichnet durch**
Mittel zum Erstellen einer zweiten Abrechnungsanforderung, die der ersten Abrechnungsanforderung entspricht, wobei die zweite Abrechnungsanforderung eine zweite Sitzungskennung umfasst, wobei die zweite Sitzungskennung von der ersten Sitzungskennung verschieden ist, wobei die zweite Abrechnungsanforderung ferner Korrelationsinformationen umfasst, wobei die Korrelationsinformationen die erste Sitzungskennung umfassen; und
Mittel zum Senden der zweiten Abrechnungsanforderung als eine neu gesendete erste Abrechungsanforderung.

42. Entität nach Anspruch 41, wobei die Entität dafür ausgelegt ist, die erste Abrechnungsanforderung zu einer ersten Entität in dem Kommunikationsnetz zu senden und die zweite Abrechnungsanforderung zu einer zweiten Entität in dem Kommunikationsnetz zu senden.

43. Entität nach Anspruch 41 oder 42, wobei die Entität ein Anwendungsserver des IP-Multimediasubsystems ist.

44. Entität zur Verwendung in einem Kommunikationsnetz, wobei die Entität Folgendes umfasst:
Mittel zum Empfangen einer Abrechnungsanforderung, wobei die Abrechnungsanforderung eine zweite Sitzungskennung umfasst,
**gekennzeichnet durch**:
Mittel zum Bestimmen, ob die empfangene Abrechnungsanforderung eine neu gesendete Abrechnungsanforderung ist, die Korrelationsinformationen umfasst, wobei die Korrelationsinformationen mindestens eine Kennung umfassen; und
Mittel zum Vergleichen der mindestens einen Kennung der Korrelationsinformationen mit mindestens einer ersten Sitzungskennung in mindestens einer zuvor empfangenen Abrechnungsanforderung, um zu bestimmen, ob die neu gesendete Abrechnungsanforderung einer zuvor empfangenen Abrechnungsanforderung entspricht, wobei die zweite Sitzungskennung von der ersten Sitzungskennung verschieden ist.

45. Entität nach Anspruch 44, wobei die Entität dafür ausgelegt ist, Korrelationsfunktion der Vergebührung des Internetprotokoll-Multimediasubsystems bereitzustellen.

46. Kommunikationsnetz, das eine erste Entität (24) und eine zweite Entität umfasst, wobei die erste Entität Folgendes umfasst:
Mittel zum Senden einer ersten Abrechnungsanforderung, wobei die erste Abrechnungsanforderung eine erste Sitzungskennung umfasst, **gekennzeichnet durch**
Mittel zum Erstellen einer zweiten Abrechnungsanforderung, die der ersten Abrechnungsanforderung entspricht, wobei die zweite Abrechnungsanforderung eine zweite Sitzungskennung umfasst, wobei die zweite Sitzungskennung von der ersten Sitzungskennung verschieden ist, wobei die zweite Abrechnungsanforderung ferner Korrelationsinformationen umfasst und die Korrelationsinformationen die erste Sitzungskennung umfassen; und
Mittel zum Senden der zweiten Abrechnungsanforderung als eine neu gesendete erste Abrechnungsanforderung;
und die zweite Entität Folgendes umfasst:
Mittel zum Empfangen einer Abrechnungsanforderung,
Mittel zum Bestimmen, ob die empfangene Abrechnungsanforderung eine neu gesendete Abrechnungsanforderung ist; und
Mittel zum Vergleichen der Sitzungskennung der Korrelationsinformationen mit der ersten Sitzungskennung der mindestens einen zuvor empfangenen Abrechnungsanforderung, um zu bestimmen, ob die neu gesendete Abrechnungsanforderung der zuvor empfangenen Abrechnungsanforderung entspricht.

47. Kommunikationsnetz nach Anspruch 46, wobei die erste Entität ein Anwendungsserver des Internetprotokoll-Multimediasubsystems ist und die zweite Entität dafür ausgelegt ist, Korrelationsfunktion der Vergebührung des Internetprotokoll-Multimediasubsystems bereitzustellen.

48. Kommunikationsnetz nach Anspruch 46 oder 47, ferner umfassend:
eine dritte Entität; und
eine vierte Entität,
wobei die dritte und vierte Entität jeweils Folgendes umfassen:
Mittel zum Empfangen einer Abrechnungsanforderung und
Mittel zum Weiterleiten der empfangenen Abrechnungsanforderung zu der zweiten Entität,
wobei die erste Entität dafür ausgelegt ist, eine Abrechnungsanforderung zu der dritten Entität und eine entsprechende neugesendete Abrechnungsanforderung zu der vierten Entität zu senden.

49. Kommunikationsnetz nach Anspruch 48, wobei die dritte Entität und die vierte Entität dafür ausgelegt sind, eine Ereignisvergebührungsfunktion der Vergebührung des Internetprotokoll-Multimediasubsystems bereitzustellen.

## Revendications

1. Procédé pour fournir des demandes de comptabilisation, concernant un service fourni à un utilisateur d'un réseau de communication, le procédé comprenant les étapes consistant à :
transmettre une première demande de comptabilisation (302), ladite première demande de comptabilisation comprenant un premier identifiant de session ;
déterminer qu'une retransmission de ladite première demande de comptabilisation est requise (305) ;
**caractérisé par** le fait de :
préparer une deuxième demande de comptabilisation (308) correspondant à la première demande de comptabilisation, ladite deuxième demande de comptabilisation comprenant un deuxième identifiant de session, ledit deuxième identifiant de session étant différent du premier identifiant de session, ladite deuxième demande de comptabilisation comprenant en outre des informations de corrélation, lesdites informations de corrélation comprenant le premier identifiant de session, et
transmettre la deuxième demande de comptabilisation (309) en tant que première demande de comptabilisation retransmise.

2. Procédé selon la revendication 1, dans lequel la deuxième demande de comptabilisation est transmise si un accusé de réception pour la réception de la première demande de comptabilisation n'est pas reçu en moins d'une période de temps prédéfinie (303).

3. Procédé selon la revendication 1 ou 2, dans lequel la première demande de comptabilisation est transmise à une première entité et la deuxième demande de comptabilisation est transmise à une deuxième entité.

4. Procédé selon l'une quelconque des revendications précédentes, dans lequel les informations de corrélation comprennent un identifiant de corrélation, le procédé comprenant une étape supplémentaire consistant à :
régler l'identifiant de corrélation comme étant égal à l'identifiant de session dans la première demande de comptabilisation.

5. Procédé selon l'une quelconque des revendications précédentes, dans lequel les première et deuxième demandes de comptabilisation comprennent chacune un certain nombre d'enregistrements de comptabilisation, le procédé comprenant en outre l'étape consistant à :
régler le nombre d'enregistrements de comptabilisation de la deuxième demande de comptabilisation afin qu'elle soit identique au nombre d'enregistrements de comptabilisation de la première demande de comptabilisation.

6. Procédé selon l'une quelconque des revendications précédentes, dans lequel les première et deuxième demandes de comptabilisation comprennent au moins un autre identifiant, l'au moins un autre identifiant contenu dans la première demande de comptabilisation étant différent d'au moins un autre identifiant correspondant contenu dans la deuxième demande de comptabilisation et lesdites informations de corrélation comprennent en outre ledit au moins un autre identifiant provenant de la première demande de comptabilisation.

7. Procédé selon l'une quelconque des revendications précédentes, dans lequel ladite deuxième demande de comptabilisation comprend, en plus des informations de corrélation, au moins certains des mêmes identifiants que dans la première demande de comptabilisation.

8. Procédé selon la revendication 7, dans lequel une ou plusieurs valeurs d'au moins certains des mêmes identifiants contenus dans lesdites première et deuxième demandes de comptabilisation sont différentes.

9. Procédé selon l'une quelconque des revendications précédentes, dans lequel une demande de comptabilisation est une demande de comptabilisation d'architecture de tarification de sous-système multimédia à protocole Internet.

10. Procédé selon l'une quelconque des revendications précédentes, dans lequel des demandes de comptabilisation sont transmises en utilisant le protocole Diameter, une demande de comptabilisation comprend un identifiant de session Diameter, et une demande de comptabilisation retransmise comprend des informations indiquant la retransmission.

11. Procédé selon l'une quelconque des revendications précédentes, dans lequel des demandes de comptabilisation sont transmises en utilisant le protocole Radius.

12. Procédé selon l'une quelconque des revendications précédentes, dans lequel chaque demande de comptabilisation comprend au moins un identifiant conçu pour avoir une pluralité de valeurs différentes, lesdites valeurs fournissant des informations respectives pour les identifiants respectifs.

13. Procédé selon la revendication 12, dans lequel les informations de corrélation comprennent un identifiant de corrélation.

14. Procédé selon l'une quelconque des revendications précédentes, dans lequel chaque demande de comptabilisation comprend au moins un identifiant comprenant des premières informations indiquant le nom de l'identifiant et des deuxièmes informations indiquant la valeur de l'identifiant.

15. Procédé selon la revendication 14, dans lequel les identifiants sont transmis en tant que paires de valeurs d'attributs.

16. Procédé selon la revendication 14 ou 15, dans lequel les informations de corrélation comprennent un identifiant de corrélation.

17. Procédé selon l'une quelconque des revendications précédentes, dans lequel la demande de comptabilisation retransmise concerne un événement de tarification ponctuel.

18. Procédé selon la revendication 17, dans lequel l'événement de facturation ponctuel est un événement devant être facturé à partir d'un compte d'abonné.

19. Procédé selon la revendication 17 ou 18, dans lequel l'événement de facturation ponctuel est un événement devant être remboursé à un compte d'abonné.

20. Procédé selon l'une quelconque des revendications précédentes, dans lequel la première demande de comptabilisation concerne la facturation en ligne.

21. Procédé selon l'une quelconque des revendications précédentes, dans lequel la première demande de comptabilisation concerne la facturation hors ligne.

22. Procédé selon l'une quelconque des revendications précédentes, dans lequel la deuxième demande de comptabilisation comprend des informations indiquant que la deuxième demande de comptabilisation est une demande de comptabilisation retransmise.

23. Procédé de traitement de demandes de comptabilisation, concernant un service fourni à un utilisateur d'un réseau de communication, le procédé comprenant les étapes consistant à :
recevoir une demande de comptabilisation (401), ladite demande de comptabilisation comprenant un deuxième identifiant de session ;
déterminer si la demande de comptabilisation reçue est une demande de comptabilisation retransmise (402) comprenant des informations de corrélation, lesdites informations de corrélation comprenant au moins un identifiant, et
comparer l'au moins un identifiant desdites informations de corrélation à au moins un premier identifiant de session contenu dans au moins une demande de comptabilisation reçue précédemment (406) pour déterminer si la demande de comptabilisation retransmise correspond à une demande de comptabilisation précédemment reçue, le deuxième identifiant de session étant différent du premier identifiant de session.

24. Procédé selon la revendication 23, comprenant en outre l'étape consistant à :
envoyer un accusé de réception pour la réception de la demande de comptabilisation retransmise reçue (404), si la demande de comptabilisation reçue est une demande de comptabilisation retransmise.

25. Procédé selon la revendication 23 ou 24, comprenant en outre l'étape consistant à :
ignorer la demande de comptabilisation retransmise reçue (408), si une demande de comptabilisation précédemment reçue correspondante est trouvée.

26. Procédé selon la revendication 23, 24 ou 25, comprenant en outre l'étape consistant à :
traiter la demande de comptabilisation retransmise reçue pour provoquer un événement de facturation sur un compte d'utilisateur (403), si une demande de comptabilisation précédemment reçue correspondante n'est pas trouvée.

27. Procédé selon l'une quelconque des revendications 23 à 26, dans lequel une demande de comptabilisation est une demande de comptabilisation d'architecture de facturation de sous-système multimédia à protocole Internet.

28. Procédé selon l'une quelconque des revendications 23 à 27, dans lequel des demandes de comptabilisation sont transmises en utilisant le protocole Diameter, une demande de comptabilisation comprend un identifiant de session Diameter, et une demande de comptabilisation retransmise comprend des informations indiquant la retransmission.

29. Procédé selon l'une quelconque des revendications 23 à 28, dans lequel des demandes de comptabilisation sont transmises en utilisant le protocole Radius.

30. Procédé selon l'une quelconque des revendications 23 à 29, dans lequel chaque demande de comptabilisation comprend au moins un identifiant configuré pour avoir une pluralité de valeurs différentes, lesdites valeurs fournissant des informations respectives pour des identifiants respectifs.

31. Procédé selon la revendication 30, dans lequel les informations de corrélation sont un identifiant de corrélation.

32. Procédé selon l'une quelconque des revendications 23 à 31, dans lequel chaque demande de comptabilisation comprend au moins un identifiant comprenant des premières informations indiquant le nom de l'identifiant et des deuxièmes informations indiquant la valeur de l'identifiant.

33. Procédé selon la revendication 32, dans lequel les identifiants sont transmis en tant que Paires de Valeurs d'Attributs.

34. Procédé selon la revendication 32 ou 33, dans lequel les informations de corrélation sont un identifiant de corrélation.

35. Procédé selon l'une quelconque des revendications 23 à 34, dans lequel la demande de comptabilisation retransmise concerne un événement de facturation ponctuel.

36. Procédé selon la revendication 35, dans lequel l'événement de facturation ponctuel est un événement devant être facturé à partir d'un compte d'abonné.

37. Procédé selon la revendication 35 ou 36, dans lequel l'événement de facturation ponctuel est un événement devant être remboursé à un compte d'abonné.

38. Procédé selon l'une quelconque des revendications 23 à 37, dans lequel la demande de comptabilisation retransmise concerne la facturation en ligne.

39. Procédé selon l'une quelconque des revendications 23 à 38, dans lequel la demande de comptabilisation retransmise concerne la facturation hors ligne.

40. Procédé selon l'une quelconque des revendications 23 à 39, dans lequel la demande de comptabilisation retransmise comprend des informations indiquant que la demande de comptabilisation retransmise est une demande de comptabilisation retransmise.

41. Entité (24) destinée à être utilisée dans un réseau de communication, l'entité comprenant :
des moyens pour transmettre une première demande de comptabilisation, ladite demande de comptabilisation comprenant un premier identifiant de session,
des moyens pour déterminer qu'une retransmission de la première demande de comptabilisation est requise, **caractérisée par** :
des moyens pour préparer une deuxième demande de comptabilisation correspondant à la première demande de comptabilisation, ladite deuxième demande de comptabilisation comprenant un deuxième identifiant de session, ledit deuxième identifiant de session étant différent du premier identifiant de session, ladite deuxième demande de comptabilisation comprenant en outre des informations de corrélation, lesdites informations de corrélation comprenant le premier identifiant de session ; et
des moyens pour transmettre la deuxième demande de comptabilisation en tant que première demande de comptabilisation retransmise.

42. Entité selon la revendication 41, dans laquelle l'entité est conçue pour transmettre ladite première demande de comptabilisation à une première entité dans le réseau de communication et ladite deuxième demande de comptabilisation à une deuxième entité dans le réseau de communication.

43. Entité selon la revendication 41 ou 42, l'entité étant un serveur d'applications du Sous-Système Multimédia IP.

44. Entité destinée à être utilisée dans un réseau de communication, l'entité comprenant
des moyens pour recevoir une demande de comptabilisation, ladite demande de comptabilisation comprenant un deuxième identifiant de session,
**caractérisé par** :
des moyens pour déterminer si la demande de comptabilisation reçue est une demande de comptabilisation retransmise comprenant des informations de corrélation, lesdites informations de corrélation comprenant au moins un identifiant ; et
des moyens pour comparer l'au moins un identifiant desdites informations de corrélation à au moins un premier identifiant de session contenu dans au moins une demande de comptabilisation précédemment reçue pour déterminer si la demande de comptabilisation retransmise correspond à une demande de comptabilisation précédemment reçue, le deuxième identifiant de session étant différent du premier identifiant de session.

45. Entité selon la revendication 44, l'entité étant conçue pour fournir une fonction de corrélation de la facturation du sous-système multimédia à protocole Internet.

46. Réseau de communication comprenant une première entité (24) et une deuxième entité, la première entité comprenant :
des moyens pour transmettre une première demande de comptabilisation, ladite première demande de comptabilisation comprenant un premier identifiant de session,
**caractérisé par**
des moyens pour préparer une deuxième demande de comptabilisation correspondant à la première demande de comptabilisation, ladite deuxième demande de comptabilisation comprenant un deuxième identifiant de session, ledit deuxième identifiant de session étant différent du premier identifiant de session, ladite deuxième demande de comptabilisation comprenant en outre des informations de corrélation, lesdites informations de corrélation comprenant ledit premier identifiant de session ; et
des moyens pour transmettre la deuxième demande de comptabilisation en tant que première demande de comptabilisation retransmise ;
et la deuxième entité comprenant
des moyens pour recevoir une demande de comptabilisation,
des moyens pour déterminer si ladite demande de comptabilisation reçue est une demande de comptabilisation retransmise ; et
des moyens pour comparer ledit identifiant de session desdites informations de corrélation au premier identifiant de session d'au moins une demande de comptabilisation précédemment reçue pour déterminer si la demande de comptabilisation retransmise correspond à la demande de comptabilisation précédemment reçue.

47. Réseau de communication selon la revendication 46, dans lequel la première entité est un serveur d'applications du sous-système multimédia à protocole Internet, et la deuxième entité est conçue pour fournir une fonction de corrélation de la facturation du sous-système multimédia à protocole Internet.

48. Réseau de communication selon la revendication 46 ou 47, comprenant en outre :
une troisième entité ; et
une quatrième entité,
chacune des troisième et quatrième entités comprenant:
des moyens pour recevoir une demande de comptabilisation, et
des moyens pour réacheminer la demande de comptabilisation reçue à la deuxième entité,
dans lequel la première entité est conçue pour transmettre une demande de comptabilisation à la troisième entité et une demande de comptabilisation retransmise correspondante à la quatrième entité.

49. Réseau de communication selon la revendication 48, dans lequel la troisième entité et la quatrième entités sont conçues pour fournir une fonction de facturation d'événement de la facturation du sous-système multimédia à protocole Internet.
